# EUROPÄISCHE PATENTANMELDUNG

(11) **EP 4 131 682 A1**
(43) Veröffentlichungstag der Anmeldung: **08.02.2023**
(21) Anmeldenummer: 22188005.7
(22) Anmeldetag: 01.08.2022
(51) Int. Cl.: H02G 3/00

(54) **KOPFANSCHLUSSTEIL ZUM BEFESTIGEN EINES HÄNGESTIELS EINES KABELTRAGSYSTEMS AN EINER DECKE**

(30) Priorität: 03.08.2021 DE 202021104122 U
(71) Anmelder: OBO Bettermann Hungary Kft., 2347 Bugyi (HU)
(72) Erfinder: Gehling, Andreas Große, 58710 Menden (DE)
(74) Vertreter: Haverkamp Patentanwälte PartG mbB

(57) **Zusammenfassung**

Die Erfindung betritt ein Kopfanschlussteil 2 zum Befestigen eines Hängestiels 3 eines Kabeltragsystems 1 an einer Decke mit einer an einer Decke befestigbaren Stegplatte 6 und zwei an gegenüberliegenden Kanten 7 der Stegplatte 6 angeformten Seitenwangen 8, 8.1 zum Ausbilden einer U-förmigen Stielaufnahme. Die zumindest eine der beiden Seitenwangen 8, 8.1 weist wenigstens eine in die Stielaufnahme ausgestellte Haltelasche 9, 9.1 auf, vorgesehen zum Eingreifen in eine Halteaussparung 10 eines Hängestiels 3, wenn dieser an dem Kopfanschlussteil 2 montiert ist.

## Beschreibung

Die Erfindung betrifft ein Kopfanschlussteil zum Befestigen eines Hängestiels eines Kabeltragsystems an einer Decke mit einer an einer Decke befestigbaren Stegplatte und zwei an gegenüberliegenden Kanten der Stegplatte angeformten Seitenwangen zum Ausbilden einer U-förmigen Stielaufnahme.

Kabeltragsysteme dienen dem Tragen von Kabeln im Raum, beispielsweise in einem Gebäude. Hierzu verfügt das Kabeltragsystem typischerweise über eine Kabeltrasse, die etwa nach Art einer Kabelrinne, einer Kabelleiter oder einer Gitterkabelrinne ausgeführt sein kann. Auf der Kabeltrasse sind Kabel und Leitungen geführt bzw. gelegt. Eine andere Möglichkeit zum Ausbilden einer Kabeltrasse ist das Vorsehen einzelner Sprossen, über die Kabel abgestützt werden; eine durchgängige Unterstützung der Kabel wird hierdurch eingespart.

Zum Tragen der Kabeltrasse kann eine Deckenbefestigung vorgesehen sein. Diese erfolgt typischerweise mittels von der Decke herunterragender Hängestiele. Hängestiele zeichnen sich in aller Regel durch ein vierkantiges Hohlprofil aus, welches nicht selten als U-Profil oder Montageschiene-Profil ausgeführt ist, jedoch auch als geschlossenes Profil vorgesehen sein kann. Ein solcher Hängestiel wird mittels eines Kopfanschlussteils an der Decke befestigt.

Ein Beispiel für eine Deckenbefestigung eines Hängestiels offenbart WO 2018/109420 A1: Offenbart ist ein Kopfanschlussteil, welches im Querschnitt U-förmig ausgebildet ist. Dieses verfügt über eine an einer Decke befestigbare Stegplatte sowie über zwei an gegenüberliegenden Kanten der Stegplatte angeformte Seitenwangen. Zwischen die beiden Seitenwangen ist ein Hängestiel mit einem Endabschnitt einbringbar, sodass die Seitenwangen den Hängestiel seitlich einfassen. Zusätzlich sind in die Seitenwangen einsetzbare Adapterteile vorgesehen, die Rastnasen aufweisen, die wiederum in Halteaussparungen des Hängestiels eingreifen. Auf diese Weise ist der Hängestiel an der Decke fixierbar. Durch eine Schrägverschiebbarkeit der Adapterplatten in den Seitenwangen ist eine Adaption der Stielaufnahmenweite bereitgestellt.

In einer Ausgestaltung nach EP 2 808 964 B1 ist vorgesehen, ein geschlitztes Vierkantprofil als Stielaufnahme vorzusehen, dessen einer Endabschnitt an den Biegekanten geschlitzt und segmentiert nach außen ausgestellt ist, sodass vier nach außen abragende Anbindungslaschen bereitgestellt sind. Ein Hängestiel ist in das als Stielaufnahme ausgebildete Innere des Vierkantprofils einführbar, mit in die Stielaufnahme ausgestellten Rastnasen verrastbar und so fixiert.

Eine weitere Ausgestaltung sieht eine Kopfplatte mit einer daran angeschweißten Stielaufnahme vor.

Nachteilig bei dem Stand der Technik gemäß WO 2018/109420 A1 ist die Mehrteiligkeit, die in einem hohen Montageaufwand resultiert, sowie die aufwendigen Herstellungsverfahren, die aufgrund der Mehrteiligkeit in einem engen Toleranzfeld ausgeführt werden müssen. Nach außen ausgestellte Anbindungslaschen oder -platten erfordern einen Abstand gegenüber einer die Decke tragenden Wand, können mithin nicht unmittelbar im Übergangsbereich von Decke zu Wand befestigt werden. Angeschweißte Stielaufnahmen müssen als gesamtes Bauteil nach dem Schweißen behandelt und/oder beschichtet werden, um Korrosionen zu verhindern.

Vor diesem Hintergrund ist es Aufgabe der Erfindung, ein kompaktes Kopfanschlussteil vorzuschlagen, bei dem die genannten Nachteile, insbesondere die Mehrteiligkeit sowie der aufwendige Herstellungsprozess, vermieden sind und dennoch eine einfache, insbesondere werkzeuglose Montage eines Hängestiels möglich ist.

Gelöst wird diese Aufgabe durch ein eingangs genanntes, gattungsgemäßes Kopfanschlussteil, bei dem zumindest eine der beiden Seitenwangen wenigstens eine in die Stielaufnahme ausgestellte Haltelasche aufweist, vorgesehen zum Eingreifen in eine Halteaussparung eines Hängestiels, wenn dieser an dem Kopfanschlussteil montiert ist.

Vorteilhafte Ausgestaltungen ergeben sich aus den abhängigen Ansprüchen sowie der Beschreibung.

Durch das einstückige Vorsehen der Stielaufnahme mit der von der zumindest einen Seitenwange ausgestellten, wenigstens einen Haltelasche kann der Herstellungsprozess auf einen einfachen Stanz- und Biegeprozess eines einzigen Teils reduziert werden, der ohne aufwendige, ein Umsetzen des Werkstückes erforderliche Geometrien auskommt und gleichzeitig ein Maximum an Komfort bei der Montage bietet. Durch die U-förmige Stielaufnahme wird ein von den Seitenwangen zumindest abschnittsweise begrenzter Raum bereitgestellt, in den der Hängestiel zur Montage eingebracht wird. Auf diese Weise ist der Hängestiel beidseitig durch die Seitenwangen eingefasst und kann bevorzugt mit den Seitenwangen in Kontakt stehen. Die Seitenwangen können gegenüber der Stegplatte elastisch verstellt werden, sodass eine an die Seitenwange angeformte und in die Stielaufnahme hineinragende ausgestellte Haltelasche in eine vorgesehene Halteaussparung des Hängestiels bei der Montage eingeführt werden kann. Eine Halteaussparung kann eine Aussparung sein, die in einem wiederholten Muster entlang der Längserstreckung des Hängestiels vorgesehen ist und etwa an anderer Stelle auch an dem Hängestiel zum Befestigen einer Kabeltrasse vorgesehen ist. Auf diese Weise kann der Hängestiel an nahezu jeder beliebigen Stelle gekürzt werden, wobei eine Montage an dem Kopfanschlussteil immer möglich ist. Die Haltelasche nimmt die Gewichtskraft des Hängestiels und je nach Ausgestaltung ggf. auch ein Biegemoment auf, wenn dieser an einem erfindungsgemäßen, an einer Decke befestigten Kopfanschlussteil, montiert ist.

Die Haltelasche ist von der Seitenwange typischerweise durch Ausstanzen ausgestellt. Hierbei wird eine Lasche an einer Biegekante mit einem Presswerkzeug aus der Ebene der Seitenwange im Rahmen eines Stanz-Umformprozesses herausgedrückt und verbleibt so entlang der Biegekante an der Seitenwange angeformt; zumindest abschnittsweise ragt die Lasche in die Stielaufnahme hinein, typischerweise mit ihrem freien Abschluss zur Stegplatte weisend. Der freie Abschluss ist das Ende der Lasche, die der Biegekante gegenüberliegt.

Zum Befestigen des Kopfanschlussteils kann die Stegplatte zumindest eine Aussparung aufweisen, durch die ein Schraubbolzen hindurchführbar ist. Durch die im Querschnitt U-förmige Ausgestaltung ist von Seiten der Stielaufnahme genügend Raum, um etwaige Befestiger durch die Aussparung hindurchzuführen, durch eine Drehbewegung, auch unter Nutzung von hebelförmigen Werkzeugen wie einem Schraubschlüssel in einer Decke zu befestigen und so das Kopfanschlussteil zu fixieren. Typischerweise sind mehrere derartige Aussparungen in der Stegplatte vorgesehen, damit diese mit mehreren Befestigern deckenseitig angeschlossen werden kann.

Es kann vorgesehen sein, dass das Kopfanschlussteil fachwerkartig von der Decke herabragt. Dann ist das Kopfanschlussteil, insbesondere die Seitenwangen, trapezförmig. Auf diese Weise kann auch nur eine gegenüber der Hängestiellängserstreckung exzentrischer, einseitiger Anschluss des Kopfanschlussteils an der Decke erfolgen und zwar an der der Belastung zugewandten Seite der Stegplatte. Dann wirkt auf den Schraubbolzen lediglich eine Zugbelastung, während auf der der Last abgewandten Seite das Kopfanschlussteil durch die Belastung gegen die Decke gedrückt wird. Dies vereinfacht die Montage.

So kann insgesamt zum Herstellen eines Kopfanschlussteils vorgesehen sein, dass in einem ersten Prozessschritt aus einer Blechplatine die erforderlichen Haltelaschen sowie etwaige weitere benötigte Aussparungen sowie andere ggf. gewünschte Elemente ausgestellt/ausgestanzt werden und dass anschließend die so vorgefertigte Platine in besagte U-Form entlang der Biegekanten der dann vorgesehenen Stegplatte gebogen wird, um eine Stielaufnahme bereitzustellen.

In einer Ausgestaltung kann vorgesehen sein, dass die zumindest eine Seitenwange wenigstens zwei Haltelaschen aufweist. Diese sind in Hängestiellängserstreckungsrichtung und somit typischerweise in Einführrichtung des Hängestiels beabstandet voneinander angeordnet. Ihr Abstand entspricht dem Abstand zweier Halteaussparungen des Hängestiels, sodass, wenn ein Hängestiel montiert ist, beide Haltelaschen in den Hängestiel formschlüssig eingreifen. Möglich ist auch, dass die beiden Haltelaschen quer zur Hängestiellängserstreckung versetzt angeordnet sind. Dies ist typischerweise dann der Fall, wenn der Hängestiel mehrere, nebeneinander angeordnete Halteaussparungen aufweist, die typischerweise in Reihen angeordnet sind. Durch das zusätzliche Vorsehen wenigstens einer weiteren, den Hängestiel abstützenden Haltelasche wird die eingeleitete Gewichtskraft auf eine größere Fläche aufgeteilt, sodass die Flächenpressung auf jede einzelne Haltelasche herabgesetzt und einer plastischen Verformung des Hängestiels und/oder der Haltelaschen entgegengewirkt wird. Zudem kann durch die Zweipunktaufnahme ein auf den Hängestiel wirkendes Biegemoment in das Kopfanschlussteil aufgefangen werden.

Sind zwei Haltelaschen übereinander angeordnet, ist bevorzugt vorgesehen, dass die Haltelasche, die näher an der Stegplatte angeordnet ist, weniger weit in die Stielaufnahme hinein ausgestellt ist als die von der Stegplatte weiter entferntere. Die beiden Haltelaschen ragen dann unterschiedlich weit in die Stielaufnahme hinein bzw. von der zumindest einen Seitenwange ab. Zum Montieren des Hängestiels an dem Kopfanschlussteil werden die an der Stegplatte angeformten Seitenwangen an ihrem jeweiligen freien Ende etwas auseinandergebogen. Hier wird die Elastizität der Schenkel bzw. des Übergangs zwischen Stegplatte und Seitenwange ausgenutzt. Durch das Auseinanderbiegen stellt sich eine im Wesentlichen trapezförmige Aufnahme ein. Durch die vorstehend beschriebene Ausgestaltung liegen in diesem aufgebogenen Zustand die freien Abschlüsse der Haltelaschen etwa in einer senkrechten, an die äußere Mantelfläche des Hängestiels angepassten Ebene. Auf diese Weise ist die Kraft, die auf die Haltelaschen wirkt, auf dieselben gleichmäßig verteilt, sodass vermieden wird, dass sich diese plastisch verformen. Auch einem plastischen Verformen der Schenkel wird so entgegengewirkt. Zuletzt muss durch diese Ausgestaltung weniger Kraft zum Montieren des Hängestiels aufgewendet werden.

Der Winkel zwischen Seitenwange und Haltelasche beträgt typischerweise einige Grad bis 90°, sodass der freie Abschluss der Haltelasche bevorzugt nicht von der Stegplatte wegweist.

Es kann vorgesehen sein, dass die zumindest eine Haltelasche als Rastklinke ausgebildet ist, deren freier Abschluss in Richtung der Stegplatte weist. Der Winkel zwischen Seitenwange und Haltelasche beträgt dann einige Grad bis kleiner 90°, bevorzugt bis kleiner etwa 45°. Auf diese Weise wird durch die Haltelasche ein Widerhaken bereitgestellt: Die nach unten weisende Schräge der angestellten Haltelasche erleichtert als Stellschräge das Einführen eines Hängestiels, da durch die schräge Ebene die Seitenwangen durch eine Einführbewegung selbsttätig quer zur Einführbewegung gespreizt werden. Der Hängestiel wird dann hinreichend weit in die Stielaufnahme eingeschoben. Ein Demontieren des Hängestiels ist durch eine in die entgegengesetzte Richtung gerichtete Bewegung (etwa durch das Aufbringen einer Gewichtskraft) nicht möglich. Auf diese Weise ist der Hängestiel, wenn montiert, sicher gehalten.

Die Rastklinke kann so ausgebildet sein, dass das die Halteaussparung des Hängestiels umgebende Material auf dem freien Abschluss der Haltelasche, typischerweise der Stirnfläche der Haltelasche aufsteht. Dann beträgt der Winkel zwischen Haltelasche und Seitenwange nur wenige Grad, sodass der freie Abschluss der Haltelasche nicht oder nicht wesentlich von der Seitenwange beabstandet ist. Wichtig ist, dass die Schräge bzw. die Stirnfläche von der Stegplatte nur in einem solchen Winkel wegweist, dass zwischen Stirnfläche und Hängestiel eine Selbsthemmung eintritt.

Bevorzugt ist jedoch vorgesehen, dass die Haltelasche so weit in die Stielaufnahme hinein ausgestellt ist, dass zwischen Seitenwange und freiem Abschluss der Haltelasche ein solcher Abstand ist, dass der Hängestiel, wenn montiert, die Haltelasche zumindest abschnittsweise mit zumindest einem Teil des die Halteaussparung einfassenden Materials hintergreift. Der die Halteaussparung umgebende Bereich des Hängestiels ist dann zwischen Haltelasche und Seitenwange eingefasst. Hierdurch wird ein Formschluss zwischen Kopfanschlussteil und Hängestiel bereitgestellt. Wirkt eine Gewichtskraft auf den Hängestiel, wird der die Halteaussparung umgebende Bereich - genauer gesagt: Das die Halteaussparung umgebende, zur Stegplatte hin weisende Material - in die durch Haltelasche und Seitenwange gebildete Kerbe, somit zur Biegekante der Haltelasche, gezogen.

Zur Demontage des Hängestiels ist bei dieser Ausgestaltung ein Versetzen des Hängestiels in Richtung zur Stegplatte erforderlich, bis die Haltelasche nicht mehr in die Halteaussparung des Hängestiels hintergreift und der Hängestiel unter Spreizung der beiden Seitenwangen aus der Hängestielaufnahme entnommen werden kann.

Um nach der Montage einer versehentlichen Demontage entgegenzuwirken, kann vorgesehen sein, dass das Kopfanschlussteil eine Sicherungslasche aufweist. Die Sicherungslasche greift in eine Aussparung, typischerweise in eine weitere Halteaussparung des Hängestiels ein. Sie soll verhindern, dass der Hängestiel in Richtung Stegplatte verschoben werden kann. Hierfür ist ihre Wirkrichtung eine andere als diejenige der zumindest einen Haltelasche. Beispielsweise kann die Winkelausrichtung zwischen Seitenwange und Lasche unterschiedlich, bevorzugt entgegengesetzt, ausgerichtet sein oder die Sicherungslasche ragt weiter in die Stielaufnahme hinein als die Haltelasche. Durch eine entsprechende Stanzperforation ist die Ausstellrichtung der Sicherungslasche bereits im Auslieferungszustand werksseitig vorgegeben, auch wenn zur Montage die Sicherungslasche noch nicht ausgestellt ist.

Durch das Vorsehen einer Sicherungslasche wird zudem der Montagevorgang vereinfacht: Das zusätzliche Vorsehen eines Splintes und/oder einer Schraube kann grundsätzlich entfallen; dies schließt jedoch nicht aus, dass ein solcher/eine solche montiert werden kann.

So kann auch vorgesehen sein, dass durch eine Aussparung, die unmittelbar auf der von der Stegplatte wegweisenden Seite der Haltelasche (mithin, wenn das Kopfanschlussteil an einer Decke montiert ist, unter der Haltelasche) angeordnet ist, ein Bolzen, ein Splint oder ein anderes Sicherungsteil bei montiertem Hängestiel so führbar ist, dass die zumindest eine Haltelasche an dem Sicherungsteil abgestützt ist, typischerweise durch unmittelbaren Kontakt miteinander. Das Sicherungsteil stützt sich wiederum an dem die Aussparung umgebenden Bereich der Seitenwange ab. Auf diese Weise ist verhindert, dass die Haltelasche aufgrund der auf sie wirkenden Gewichtskraft aufgebogen wird, sodass unter Umständen ihre Haltefunktion nicht mehr gewährleistet wäre.

Typischerweise wird als Aussparung in der Seitenwange die durch das Ausstellen der Haltelasche gebildete Aussparung genutzt. Die Haltelasche kann in dieser Anordnung etwa im 90°-Winkel gegenüber der Seitenwange ausgestellt sein, wobei das Ausstellen vorzugsweise von unten erfolgt. In die so durch das Ausstellen bereitgestellte Aussparung ist dann ein Bolzen einführbar.

Durch ein optionales Anliegen des Sicherungsteils an der jeweiligen Außenseite der beiden gegenüberliegenden Seitenwangen kann zudem verhindert werden, dass die U-förmige Anordnung der Seitenwangen unbeabsichtigt aufgebogen wird, sodass die Gefahr minimiert wird, dass die zumindest eine Haltelasche aus den Halteaussparungen des Hängestiels entfernt wird.

Für einen einfachen Herstellprozess und eine einfache Montage kann vorgesehen sein, dass ein entsprechendes Sicherungsteil in Form eines Splintes im Auslieferungszustand des Kopfanschlussteils mit zumindest einem Sollbruchsteg an dasselbe angeformt ist. Alternativ kann auch vorgesehen sein, dass der Splint im Rahmen eines Knock-Out-Verfahrens bereitgestellt wird: Bei diesem Verfahren wird ein Teil des Materials herausgestanzt, gleichzeitig jedoch wieder in die Seitenwange eingequetscht, so dass es in derselben gehalten ist. Typischerweise wird hierfür Material der Seitenwange genutzt, welche für eine gewichtsreduzierende Aussparung ohnehin ausgespart wird. Eine etwaige Vorformung des Sicherungsteils, etwa eine U-förmige Querschnittsform, kann ab Werk oder im Rahmen der Montage vorgesehen sein.

Zumindest eine Seitenwange, bevorzugt beide Seitenwangen, und die Stegplatte schließen bevorzugt einen Winkel von kleiner 90° ein. Damit ist die lichte Weite der Stielaufnahme im Bereich der Stegplatte größer als im Bereich der Enden der Seitenwangen. Auf diese Weise wirkt die zumindest eine Seitenwange auf den Hängestiel, wenn dieser montiert ist, mit einer gewissen Vorspannung und ist im Zustand, wenn ein Hängestiel montiert ist, typischerweise senkrecht gegenüber der Stegplatte ausgerichtet. Auf diese Weise ist eine besonders sichere Anbindung des Hängestiels an dem Kopfanschlussteil erreicht, gleichzeitig jedoch auch eine optimale Ausrichtung der Bauteile in Bezug auf einen Kraftfluss verwirklicht. Durch die trapezförmige Ausbildung des Querschnitts des Kopfanschlussteils können zudem in gewissen Grenzen auch unterschiedlich breite Hängestiele in dem gleichen Kopfanschlussteil fixiert werden, wobei die Seitenwangen auf einen weniger breiten Hängestiel mit einer kleineren Vorspannung als auf einen breiteren Hängestiel wirken.

Alternativ kann vorgesehen sein, dass zumindest eine Seitenwange, bevorzugt beide Seitenwangen und die Stegplatte einen Winkel von > 90° einschließen. Hierdurch wird das Einführen des Hängestiels zwischen die Seitenwangen vereinfacht. Durch entsprechende Sicherungselemente können die beiden Seitenwangen nach der Montage des Hängestiels an den Hängestiel herangezogen werden.

Bevorzugt ist vorgesehen, dass beide Seitenwangen zumindest eine Haltelasche aufweisen. Auf diese Weise ist eine symmetrische Krafteinleitung in beide Seitenwangen des Kopfanschlussteils gewährleistet. Jegliche obigen Ausführungen betreffend die Haltelasche sind besonders bevorzugt für beide Seitenwangen verwirklicht, auch wenn eine teilweise einseitige Ausführung möglich ist.

Hervorzuheben ist eine Ausgestaltung, bei der die zumindest eine Haltelasche auf jeder Seite nach Art einer Rastklinke ausgebildet ist, deren freier Abschluss einen solchen Abstand zu der jeweiligen Seitenwange aufweist, dass der Hängestiel, wenn montiert, beide Haltelaschen zumindest abschnittsweise mit zumindest einem Teil des die Halteaussparung einfassenden Materials hintergreift. Sind beide Seitenwangen mit zumindest einer solchen Haltelasche ausgestattet, wird der U-förmige Querschnitt des Kopfanschlussteils durch den Hängestiel geschlossen. Ein Spreizen der Seitenwangen ist bei montiertem Hängestiel dann nicht mehr möglich; das System ist selbstsichernd. Daher kann ein solches Kopfanschlussteil ohne zusätzliche in Querrichtung wirkende Sicherungsteile auskommen.

Bevorzugt sind zusätzliche Führungslaschen am Kopfanschlussteil vorgesehen, die eine Querbewegung eines montierten Hängestiels begrenzen. Diese Führungslaschen ragen in die Stielaufnahme hinein und können als Wölbung oder auch geschält aus der Seitenwange hervorstehen. Die Führungslaschen fassen einen montierten Hängestiel quer zur Seitenwangenerstreckung kontaktierend ein und nehmen so ein auf den Hängestiel wirkendes Biegemoment auf. Vorzugsweise sind Führungslaschenpaare vorgesehen, zwischen denen der Hängestiel, wenn an dem Kopfanschlussteil montiert, angeordnet ist.

Hierbei kann der Abstand der Führungslaschen zueinander so vorgesehen sein, dass ein Hängestiel montierbar ist, der in Abstandsrichtung der Seitenwangen schmaler ist, als parallel zu den Seitenwangen. Auf diese Weise können unter Einsparung von Material und Ressourcen größere Kräfte übertragen werden.

Für eine besonders effektive Biegemomentaufnahme umfasst zumindest eine Seitenwange zwei erste Führungslaschen in einem ersten Bereich der Stielaufnahme und zwei zweite Führungslaschen in einem zweiten, von dem ersten Bereich beabstandeten Bereich der Stielaufnahme. Der zweite Bereich ist typischerweise im Bereich der freien Enden der Seitenwangen; der erste nah an der Stegplattenanbindung. Ein gewisser Abstand von der Stegplatte ist vorgesehen, damit sich zwischen diesen Führungslaschen der Hängestiel auch dann noch befindet, wenn er in seine Sicherungsstellung durch Zurückziehen desselben entgegen der Montagerichtung gebracht ist. Auf diese Weise werden zwei Einfassungen bereitgestellt, die in Bezug auf das Kopfanschlussteil hinreichend weit voneinander beabstandet sind. Die aus einem in den Hängestiel eingeleiteten Biegemoment resultierende, auf die Führungslaschen wirkende Kraft wird auf diese Weise minimiert und es wird einer Schwenkbewegung entgegengewirkt. Hierdurch kann eine höhere Sicherheit gegeben werden.

In einer Weiterbildung ist vorgesehen, dass zumindest eine Führungslasche aus der zumindest einen Seitenwange ausgestellt und damit an die Seitenwange angeformt ist. Alternativ kann auch vorgesehen sein, dass zumindest eine Führungslasche aus der Stegplatte des Kopfanschlussteils ausgestellt ist. Die durch das Ausstellen gebildete Biegekante der Führungslaschen gegenüber der Seitenwange und die Hängestiellängserstreckung, wenn ein Hängestiel montiert ist, schließen bevorzugt einen Winkel von 30° oder mehr ein. Besonders bevorzugt ist ein Winkel von etwa 45°. Idealerweise beträgt der Winkel etwa 90°. Auf diese Weise wirkt in Folge eines auf den Hängestiel wirkenden Biegemomentes auf die Führungslasche eine Kraft, die auch eine Komponente in Richtung der Längserstreckung der Biegekante der Führungslasche aufweist. Je größer dieser Anteil ist, desto besser kann die Kraft stabil in die Seitenwange aufgrund des höheren Widerstandsmomentes der Führungslasche über dieselben ohne eine Verformung eingeleitet werden.

Vorteilhaft ist es zudem, wenn beide Seitenwangen die vorstehend beschriebenen Führungslaschen aufweisen. Auf diese Weise ist eine symmetrische Krafteinleitung möglich. Zudem können die Führungslaschen bei gleicher Führungsfläche jeweils kleiner ausgebildet sein.

Durch die Einteiligkeit des beschriebenen Kopfanschlussteils ohne die Notwendigkeit, einen Fügeprozess, etwa einen Schweißprozess vorzusehen, kann nicht nur Edelstahl oder tauchfeuerverzinktes Material genutzt werden, sondern auf Grund des Verzichtes auf ein Schweißverfahren auch bandverzinktes Material. Dies wirkt sich positiv auf die Herstellkosten aus. Bandverzinktes Material ist einem Schweißprozess nicht ohne nachträgliche Korrosionsschutzbehandlung zugänglich, da beim Schweißen die schützende Zinkschicht im Bereich der Schweißnaht verdampft.

Die Erfindung wird nachstehend anhand von Ausführungsbeispielen unter Bezugnahme auf die Figuren beschrieben. Es zeigen:
- **Fig. 1:**: Montierte Teile eines Kabeltragsystems,
- **Fig. 2:**: das in Figur 1 gezeigte Kopfanschlussteil in einer isolierten, perspektivischen Querschnittsansicht,
- **Fig. 2a:**: einen vergrößerten Ausschnitt des unteren Bereichs des in Figur 2 gezeigten Kopfanschlussteils,
- **Fig. 3:**: das in Figur 1 gezeigte Kopfanschlussteil in einer anderen perspektivischen, isolierten, geschnittenen Ansicht,
- **Fig. 4:**: das in Figur 1 gezeigte Kopfanschlussteil in einer Schnittansicht mit dem in Figur 1 gezeigten, daran montierten Hängestiel,
- **Fig. 5:**: eine weitere Ausführungsform eines Kopfanschlussteils in einer ersten perspektivischen Ansicht,
- **Fig. 6:**: das in Figur 5 gezeigte Kopfanschlussteil in einer anderen perspektivischen Ansicht und
- **Fig. 7:**: das in Figur 5 gezeigte Kopfanschlussteil mit einem daran montierten Hängestiel, ebenfalls im Längsschnitt.

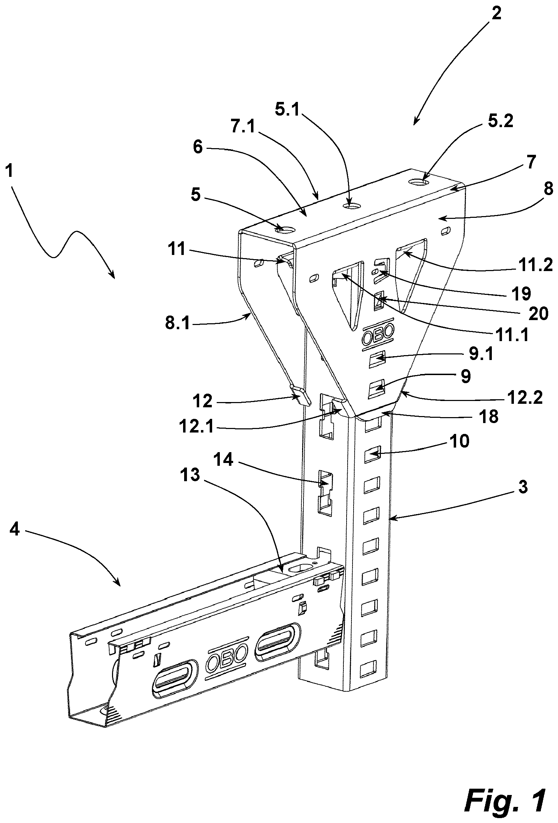

Figur 1 zeigt ein Kabeltragsystem 1, umfassend ein Kopfanschlussteil 2, einen Hängestiel 3 sowie einen Ausleger 4. Das Kopfanschlussteil 2 ist an einer nicht näher dargestellten Decke durch zumindest eine, nicht dargestellte Schraube, die durch zumindest ein Befestigungsloch der bereitgestellten Befestigungslöcher 5, 5.1, 5.2, typischerweise in das zu der belasteten Seite weisende Befestigungsloch 5, hindurchgeführt ist, befestigt.

Das Kopfanschlussteil 2 umfasst eine Stegplatte 6 sowie daran an einer Biegekante 7, 7.1 angeformte Seitenwangen 8, 8.1. Die Stegplatte 6 sowie die Seitenwangen 8, 8.1 ergeben eine im Querschnitt U-förmige Stielaufnahme. Durch die U-förmige Stielaufnahme begrenzen die Seitenwangen 8, 8.1 seitlich einen Raum, in den der Hängestiel 3 eingesetzt ist; der Hängestiel 3 ist zwischen den Seitenwangen 8, 8.1 an dem Kopfanschlussteil 2 durch vier als Rastklinken ausgebildete Haltelaschen 9, 9.1 (wobei in Figur 1 nur zwei sichtbar sind) gehalten. Die Haltelaschen 9, 9.1 greifen in Halteaussparungen 10, die als Halteaussparungsreihe in den Hängestiel 3 eingebracht sind, ein. Die Haltelaschen 9, 9.1 sind im Bereich des freien Endabschnittes der Seitenwangen 8, 8.1 und somit an dem von der Stegplatte 6 wegweisenden Endbereich der Seitenwangen 8, 8.1 vorgesehen.

Im oberen Bereich der Seitenwangen 8, 8.1 sind (in Figur 1 nur verdeckt erkennbar) erste Führungslaschen 11, 11.1, 11.2 vorgesehen, die den oberen Teil des Hängestiels 3 quer zur Ebene der Seitenwangen 8, 8.1 einfassen. Hiervon beabstandet und im unteren Bereich der Seitenwangen 8, 8.1 befindlich sind vier zweite Führungslaschen 12, 12.1, 12.2 vorgesehen (ebenfalls eine in Figur 1 verdeckt). Auch diese fassen den Hängestiel 3 quer zu den Seitenwangen 8, 8.1 ein. Auf diese Weise ist eine mit Abstand voneinander konzipierte Zweipunktabstützung bereitgestellt, um auf den Hängestiel 3 wirkende Biegemomente aufzufangen.

An dem Hängestiel 3 ist mittels eines Anschlussstücks 13 der Ausleger 4 angeschlossen. Das Anschlussstück 13 verfügt einerseits über einen in Figur 1 nicht erkennbaren Hammerkopf, der in eine Hammerkopfaussparung 14, wie sie entlang der Längserstreckung des Hängestiels 3 fortlaufend angeordnet sind, eingesetzt ist und den Hängestiel 3 von innen hintergreift. Das Anschlussstück 13 greift andererseits in den oberen Bereich eines Endabschnittes des Auslegers 4 in Aussparungen ein, sodass dieser an dem Hängestiel 3 befestigt ist. An dem dem Anschlussstück 13 gegenüberliegenden, unteren Bereich des Endabschnittes des Auslegers 4 stützt sich dieser mit seiner Stirnseite an dem Hängestiel 3 ab.

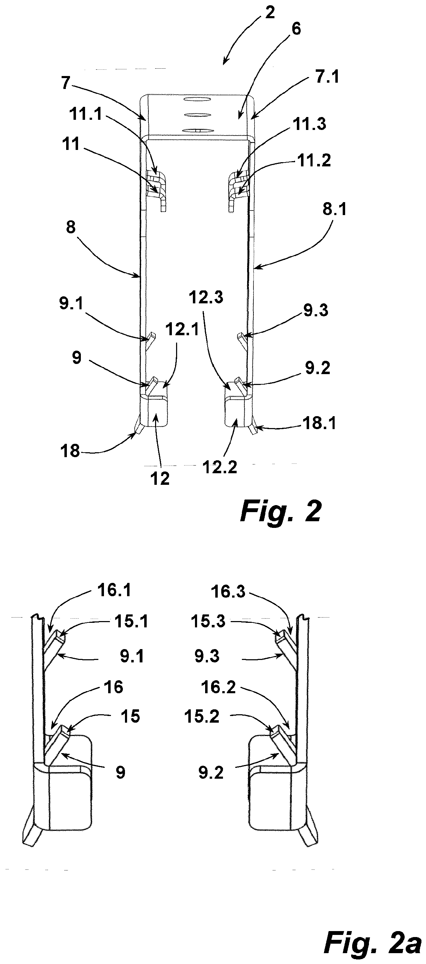

In Figur 2 sind die Biegekanten 7, 7.1 zu erkennen, an denen die Seitenwangen 8, 8.1 von der Stegplatte 6 abgekantet sind. Insgesamt ergibt sich dadurch eine U-förmige, nach unten offene Stielaufnahme.

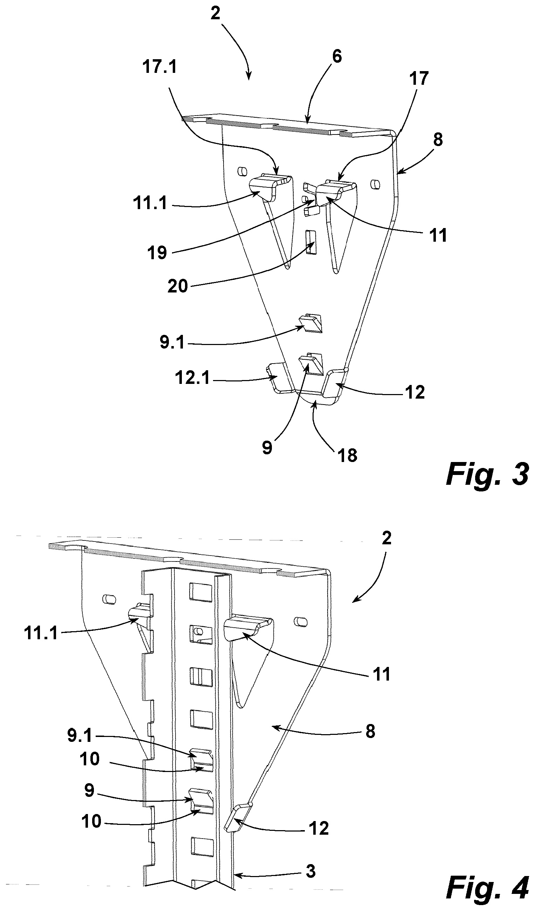

Zu erkennen sind in dieser Figur auch die Haltelaschen 9, 9.1, 9.2, 9.3, von denen jeweils zwei an beiden Seitenwangen 8, 8.1 gegenüberliegend vorgesehen sind. Jeweils gegenüberliegende Haltelaschen 9, 9.2; 9.1, 9.3 befinden sich jeweils in einer Ebene, da die Halteaussparungen 10 des Hängestiels 3 ebenfalls jeweils gegenüberliegend jeweils auf gleicher Höhe angeordnet sind. In Figur 3 ist zu erkennen, dass die Haltelaschen (dort nur an einer Seitenwange 8 dargestellt) 9, 9.1 miteinander in Hängestiellängserstreckungsrichtung fluchten; sie sind unmittelbar übereinander angeordnet. Ihr Abstand ist entsprechend dem Abstand der Halteaussparungen 10 des Hängestiels 3, sodass die Haltelaschen 9, 9.1 bzw. 9.2, 9.3 jeder Seitenwange 8 bzw. 8.1 in unmittelbar benachbarte Halteaussparungen 10 des Hängestiels 3 eingreifen. Durchaus möglich ist auch eine Ausgestaltung, bei der die Haltelaschen mit einem Abstand zueinander angeordnet sind, dass zwischen den Halteaussparungen, in denen jede Haltelasche eingreift, ein oder mehrere weitere Halteaussparungen des Hängestiels angeordnet sind.

Wie in der vergrößerten Ansicht der Figur 2 - der Figur 2a - zu erkennen, sind die Haltelaschen 9, 9.1, 9.2, 9.3 dieses Kopfanschlussteils 2 von den Seitenwangen 8, 8.1 in die Stielaufnahme hinein ausgestellt und zwar so weit, dass zwischen dem freien Abschluss 15, 15.1, 15.2, 15.3 jeder Haltelasche 9, 9.1, 9.2, 9.3 und der jeweiligen Seitenwange 8, 8.1 ein Abstand 16, 16.1, 16.2, 16.3 gegeben ist. Der Abstand 16, 16.1, 16.2, 16.3 ist so groß gewählt, dass ein montierter Hängestiel 3 die Haltelaschen 9, 9.1, 9.2, 9.3 mit seinem die Halteaussparungen 10 einfassenden Bereich bzw. Material hintergreift (siehe auch Figur 4).

In den Figuren 2 bis 4 sind zudem die bereits oben angesprochenen ersten Führungslaschen 11, 11.1, 11.2, 11.3 sowie zweiten Führungslaschen 12, 12.1, 12.2, 12.3 erkennbar. Die ersten Führungslaschen 11, 11.1, 11.2, 11.3 sind im oberen Bereich des Kopfanschlussteils 2 aus der Ebene der Seitenwangen 8, 8.1 ausgestellt und stellen durch ihre zu den freien Enden der Seitenwangen 8, 8.1 weisende L-Form eine Hängestieleinfassung quer zur Einfassungsrichtung der Seitenwangen 8, 8.1 dar. Die aus dem Ausstellen dieser Führungslaschen 11, 11.1, 11.2, 11.3 resultierende Biegekante 17, 17.1 ist orthogonal zur Hängestiellängserstreckung, wenn montiert, ausgerichtet. Zum einfachen Einführen des Hängestiels 3 weisen die Führungslaschen 11, 11.1, 11.2, 11.3 Einführschrägen auf, sodass entlang der Einführschrägen die Hängestieleinfassung quer zur Einfassungsrichtung der Seitenwange 8, 8.1 auf ihr Nennmaß geführt wird.

Im unteren Bereich des Kopfanschlussteils 2 - im Bereich der freien Enden der Seitenwangen 8, 8.1 - sind zweite Führungslaschen 12, 12.1, 12.2, 12.3 angeordnet. Auch diese fassen mit ihren Stirnflächen den Hängestiel 3 quer zur Seitenwange 8, 8.1 ein.

Das jeweilige freie Ende der beiden Seitenwangen 8, 8.1 ist von der Stielaufnahme wegweisend ausgestellt, sodass jeweils eine Leitnase 18, 18.1 bereitgestellt ist. Mithilfe der Leitnasen 18, 18.1, die in Richtung der Stielaufnahme zueinander verjüngt sind, wird ein Hängestiel 3 in die Stielaufnahme geführt, wodurch eine Montage erleichtert ist.

In Figur 3 ist zudem eine Sicherungslasche 19 an dem dargestellten Kopfanschlussteil 2 erkennbar, die werksseitig nur in die Seitenwange 8 perforiert ist. Sie kann, wenn ein Hängestiel 3 montiert ist, in eine Aussparung des Hängestiels 3, hier in eine Halteaussparung 10, eingedrückt werden. Die Wirkrichtung der Sicherungslasche 19 ist eine andere als diejenige der Haltelaschen 9, 9.1; sie wirkt durch einen Formschluss, wenn ausgestellt, gegen den unteren Bereich einer Halteaussparung 10 eines montierten Hängestiels 3 und somit entgegengesetzt zu den nach oben weisenden Haltelaschen 9, 9.1. Die Sicherungslasche 19 begrenzt eine Verschiebebewegung des Hängestiels 3 in Richtung Stegplatte 6, sodass ein Herunterheben des Hängestiels von den Haltelaschen 9, 9.1, 9.2, 9.3 verhindert wird.

Zusätzlich ist eine Aussparung 20 für ein nicht näher dargestelltes Sicherungselement, etwa eine Schraube, vorgesehen, mit dem nicht nur der gleiche Effekt wie mit der Sicherungslasche 19 in Bezug auf den Hängestiel 3 erreicht wird, sondern auch ein Auseinanderbiegen des U-förmigen Kopfanschlussteils 2, respektive der beiden Seitenwangen 8, 8.1 verhindert werden kann. Zudem kann durch das Sicherungselement die Lastaufnahme des Kopfanschlussteils 2 erhöht werden.

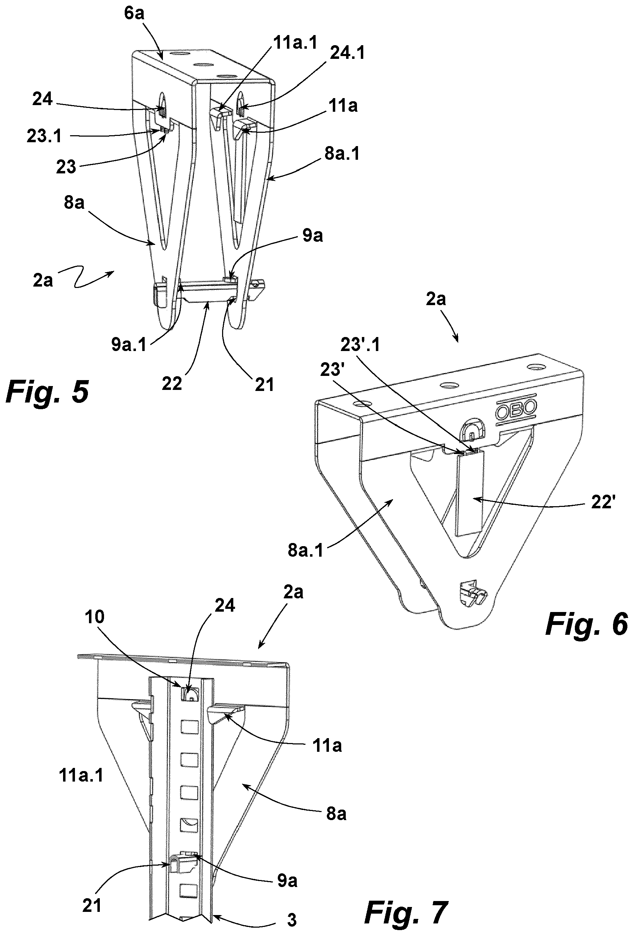

Die Figuren 5 bis 7 zeigen eine alternative Ausgestaltung eines Kopfanschlussteils 2a.

Auch dieses Kopfanschlussteil 2a verfügt über eine Stegplatte 6a sowie daran angeformte Seitenwangen 8a, 8a.1. Beide Seitenwangen 8a, 8a.1 weisen jeweils eine, der jeweils anderen gegenüberliegende Haltelasche 9a, 9a.1 auf. Diese sind ausgehend von dem freien Ende der jeweiligen Seitenwange 8a, 8a.1 in Richtung Stegplatte 6a im von etwa 90°-Winkel gegenüber der Ebene der Seitenwangen 8a, 8a.1 ausgestellt, sodass zwischen Haltelasche 9a, 9a.1 und freiem Ende der jeweiligen Seitenwange 8a, 8a.1 eine Aussparung 21 vorgesehen ist.

Durch diese Aussparung 21 ist ein Sicherungselement 22, hier in Form eines Splintes, hindurchgeführt. Bei montiertem Hängestiel 3 durchgreift das Sicherungselement 22 die Halteaussparung 10 des Hängestiels 3, und stützt sich zudem in Richtung der Gewichtskraft an dem die Aussparung 21 einfassenden Bereich der Seitenwange 8a, 8a.1 ab. Wirkt eine große Gewichtskraft auf den Hängestiel 3, ist eine mögliche Verformung der Haltelaschen 9a, 9a.1 nach unten hin begrenzt, sobald sie sich auf dem bei dem dargestellten Ausführungsbeispiel als Splint ausgeführten Sicherungselement 22 abstützen. So ist der Hängestiel 3 zu jeder Zeit an dem Kopfanschlussteil 2a gesichert.

Das Sicherungselement 22 ist im Auslieferungszustand des Kopfanschlussteils 2a an dasselbe angeformt. In den Figuren sind die Sollbruchstege 23, 23.1 erkennbar. Schematisch kann dies in Figur 6 erkannt werden: Im Bereich der Seitenwange 8a.1 ist ein plattenförmiger Sicherungselementrohling 22', der durch Sollbruchstege 23', 23'.1 an das Kopfanschlussteil 2a, respektive an die Seitenwange 8a.1 angeformt ist. Entweder kann vorgesehen sein, dass werksseitig nur das Material als Sicherungselementrohling 22' vorgesehen ist und die montierende Person diesen während der Montage in seine Endkontur bringt oder, bevorzugt, dass bereits herstellerseitig aus diesem Material das gewünschte Sicherungselement 22 bereitgestellt ist. Bevorzugt ist dabei vorgesehen, dass im Zuge dessen einer der beiden Trennstege 23', 23'.1 bereits durchtrennt ist und die montierende Person das bereits vorgeformte Sicherungselement 22, hier als Splint ausgeführt, von dem Kopfanschlussteil 2a durch plastische Deformation oder durch Abschneiden löst und so verwenden kann.

Wie auch das vorstehend beschriebene Kopfanschlussteil 2 verfügt das Kopfanschlussteil 2a im oberen Bereich über erste Führungslaschen 11a, 11a.1, von denen in den Figuren vorliegend nur zwei sichtbar sind. Diese fassen den Hängestiel 3, wenn montiert, quer zu den Seitenwangen 8a, 8a.1 ein.

Zudem verfügt dieses Kopfanschlussteil 2a über zwei gegenüberliegende Montagerasten 24, 24.1. Grundsätzlich kann auch nur eine Montageraste 24 an einer der beiden Seitenwangen 8a, 8a.1 vorgesehen sein. Die Montagerasten 24, 24.1 sind von der jeweiligen Seitenwange 8a, 8a.1 nur geringfügig ausgestellt. Dennoch können diese in Aussparungen, typischerweise die Halteaussparungen 10 eines Hängestiels 3, wenn montiert, eingreifen. Wird ein Hängestiel 3 an dem Kopfanschlussteil 2a montiert, wird der Hängestiel 3 zunächst an den Montagerasten 24, 24.1 provisorisch gehalten, bis die Haltelaschen 9a, 9a.1 in die Halteaussparungen 10 eingreifen bzw. das Sicherungselement 22 positioniert ist. Bei diesem Halten steht die Halteaussparung 10 mit in Richtung der Stegplatte 6a begrenzendem Material auf der Stirnfläche einer Montageraste 24, 24.1 auf. Eine solche Ausgestaltung ist insbesondere dann vorteilhaft, wenn zum Aufspreizen der beiden Seitenwangen 8a, 8a.1 ein zusätzliches, nicht näher dargestelltes Werkzeug genutzt wird, um den Montagevorgang zu vereinfachen. Das Werkzeug spreizt dann die beiden Seitenwangen 8a, 8a.1 so weit auseinander, dass die Haltelaschen 9a, 9a.1 kein Hindernis für ein Einführen eines Hängestiels 3 darstellen, jedoch so wenig, dass ein Hängestiel 3 durch die Montagerasten 24, 24.1 provisorisch gehalten wird, bis dass das Spreizwerkzeug entfernt wird. Aus diesem Grunde ist der Abstand zwischen Haltelaschen 9a, 9a.1 und Montagerasten 24, 24.1 entsprechend dem Abstand der Halteaussparungen 10 des Hängestiels 3. Auch können die Montagerasten 24, 24.1 der Lastaufnahme ausgehend von dem Hängestiel 3 auf das Kopfanschlussteil 2a dienen.

Die Erfindung ist anhand von Ausführungsbeispielen beschrieben worden. Ohne den Schutzbereich, beschrieben durch die Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Kabeltragsystem
- 2,2a: Kopfanschlussteil
- 3: Hängestiel
- 4: Ausleger
- 5, 5.1, 5.2: Befestigungsloch
- 6, 6a: Stegplatte
- 7, 7.1: Biegekante der Seitenwange
- 8, 8.1, 8a, 8a.1: Seitenwange
- 9, 9.1, 9.2, 9.3, 9a, 9a.1: Haltelasche
- 10: Halteaussparung
- 11, 11.1, 11.2, 11.3, 11a, 11a.1: erste Führungslasche
- 12, 12.1, 12.2, 12.3: zweite Führungslasche
- 13: Anschlussstück
- 14: Hammerkopfaussparung
- 15, 15.1, 15.2, 15.3: freier Abschluss
- 16, 16.1, 16.2, 16.3: Abstand
- 17, 17.1: Biegekante der ersten Führungslasche
- 18, 18.1: Leitnase
- 19: Sicherungslasche
- 20: Aussparung für Sicherungsbolzen
- 21: Aussparung für Bolzen
- 22: Sicherungselement
- 22': Sicherungselementrohling
- 23, 23.1, 23', 23'.1: Sollbruchsteg
- 24, 24.1: Montageraste

## Patentansprüche

1. Kopfanschlussteil (2, 2a) zum Befestigen eines Hängestiels (3) eines Kabeltragsystems (1) an einer Decke mit einer an einer Decke befestigbaren Stegplatte (6, 6a) und zwei an gegenüberliegenden Kanten (7, 7.1) der Stegplatte (6, 6a) angeformten Seitenwangen (8, 8.1, 8a, 8a.1) zum Ausbilden einer U-förmigen Stielaufnahme, **dadurch gekennzeichnet, dass** zumindest eine der beiden Seitenwangen (8, 8.1, 8a, 8a.1) wenigstens eine in die Stielaufnahme ausgestellte Haltelasche (9, 9.1, 9.2, 9.3, 9a, 9a.1) aufweist, vorgesehen zum Eingreifen in eine Halteaussparung (10) eines Hängestiels (3), wenn dieser an dem Kopfanschlussteil (2, 2a) montiert ist.

2. Kopfanschlussteil nach Anspruch 1, **dadurch gekennzeichnet, dass** die wenigstens eine Seitenwange (8, 8.1) zumindest zwei Haltelaschen (9, 9.1, 9.2, 9.3) aufweist, die in Hängestiellängserstreckungsrichtung, wenn montiert, voneinander beabstandet sind.

3. Kopfanschlussteil nach Anspruch 2, **dadurch gekennzeichnet, dass** die Haltelasche (9.1, 9.3), die näher an der Stegplatte (6) angeordnet ist, weniger weit in die Stielaufnahme hinein ausgestellt ist als die von der Stegplatte (6) weiter entferntere.

4. Kopfanschlussteil nach einem der Ansprüche 1 bis 3, **dadurch gekennzeichnet, dass** die zumindest eine Haltelasche (9, 9.1, 9.2, 9.3) als Rastklinke ausgebildet ist, deren freier Abschluss (15, 15.1, 15.2, 15.3) in Richtung der Stegplatte (6) weist.

5. Kopfanschlussteil nach Anspruch 4, **dadurch gekennzeichnet, dass** der Abstand (16, 16.1, 16.2, 16.3) zwischen der Seitenwange (8, 8.1) und dem freien Abschluss (15, 15.1, 15.2, 15.3) der jeweiligen, der Seitenwange (8, 8.1) zugehörigen Haltelasche (9, 9.1, 9.2, 9.3) derart vorgesehen ist, dass der Hängestiel (3), wenn montiert, die Haltelasche (9, 9.1, 9.2, 9.3) zumindest abschnittsweise mit zumindest einem Teil des die Halteaussparung (10) einfassenden Materials hintergreift.

6. Kopfanschlussteil nach einem der Ansprüche 1 bis 5, **dadurch gekennzeichnet, dass** an zumindest einer Seitenwange (8, 8.1) eine zusätzliche Sicherungslasche (19) ausstellbar ist, die, wenn der Hängestiel (3) montiert und die Sicherungslasche (19) ausgestellt ist, in eine an dem Hängestiel (3) eingebrachte Aussparung (10) eingreift.

7. Kopfanschlussteil nach einem der Ansprüche 1 bis 6, **dadurch gekennzeichnet, dass** unmittelbar auf der von der Stegplatte (6a) wegweisenden Seite der zumindest einen Haltelasche (9a, 9a.1) eine Aussparung (21) in der Seitenwange (8a) sowie in der gegenüberliegenden Seitenwange (8a.1) vorgesehen sind, durch die ein Bolzen (22) bei montiertem Hängestiel (3) so hindurchführbar ist, dass die zumindest eine Haltelasche (9a, 9a.1) an dem Bolzen (22) abgestützt ist.

8. Kopfanschlussteil nach Anspruch 7, **dadurch gekennzeichnet, dass** im Auslieferungszustand des Kopfanschlussteils (2a) der Bolzen (22) mit zumindest einem Sollbruchsteg (23, 23.1) an das Kopfanschlussteil (2a) angeformt ist.

9. Kopfanschlussteil nach einem der Ansprüche 1 bis 8, **dadurch gekennzeichnet, dass** zumindest eine der beiden Seitenwangen mit der Stegplatte einen Winkel von < 90° einschließen, sodass die Seitenwangen auf den Hängestiel, wenn in die Stielaufnahme eingreifend montiert, mit Vorspannung wirken.

10. Kopfanschlussteil nach einem der Ansprüche 1 bis 9, **dadurch gekennzeichnet, dass** beide Seitenwangen (8, 8.1, 8a, 8a.1) zumindest eine Haltelasche (9, 9.1, 9.2, 9.3, 9a, 9a.1) aufweisen.

11. Kopfanschlussteil nach einem der Ansprüche 1 bis 10, **dadurch gekennzeichnet, dass** zumindest eine Seitenwange (8, 8.1, 8a, 8a.1) eine in die Stielaufnahme ragende Führungslasche (11, 11.1, 11.2, 11.3, 11a, 11a.1, 11a.2, 11a.3, 12, 12.1, 12.2, 12.3) trägt, durch die eine Querbewegung des Hängestiels (3), wenn dieser an dem Kopfanschlussteil (2, 2a) montiert ist, begrenzt ist.

12. Kopfanschlussteil nach Anspruch 11, **dadurch gekennzeichnet, dass** die Führungslasche (11, 11.1, 11.2, 11.3, 11a, 11a.1, 11a.2, 11a.3) aus der zumindest einen Seitenwange (8, 8.1, 8a, 8a.1) ausgestellt ist und dass die Biegekante (17, 17.1) zwischen Führungslasche (11, 11.1, 11.2, 11.3, 11a, 11a.1, 11a.2, 11a.3) und Seitenwange (8, 8.1, 8a, 8a.1) mit der Hängestiellängserstreckung, wenn der Hängestiel (3) montiert ist, mindestens einen Winkel von 30° einschließt.

13. Kopfanschlussteil nach einem der Ansprüche 11 oder 12, **dadurch gekennzeichnet, dass** zumindest eine der beiden Seitenwangen (8, 8.1) zwei erste Führungslaschen (11, 11.1, 11.2, 11.3) beabstandet von zwei zweiten Führungslaschen (12, 12.1, 12.2, 12.3), die im von der Stegplatte (6) wegweisenden Bereich angeordnet sind, aufweist.

14. Kopfanschlussteil nach einem der Ansprüche 11 bis 13, **dadurch gekennzeichnet, dass** beide Seitenwangen (8, 8.1, 8a, 8a.1) Führungslaschen (11, 11.1, 11.2, 11.3, 11a, 11a.1, 11a.2, 11a.3, 12, 12.1, 12.2, 12.3) aufweisen.
